# EUROPEAN PATENT APPLICATION

(11) **EP 1 986 334 A2**
(43) Date of publication of application: **29.10.2008**
(21) Application number: 08153760.7
(22) Date of filing: 31.03.2008
(51) Int. Cl.: H04B 1/10, H04B 1/707

(54) **Narrowband interference cancellation method and apparatus**

(30) Priority: 23.04.2007 US 738606
(71) Applicant: TELEFONAKTIEBOLAGET LM ERICSSON (publ), 164 83 Stockholm (SE)
(72) Inventor: Sundström, Lars, 224 71, Lund (SE)
(74) Representative: Bratt, Hanna Catharina

(57) **Abstract**

A Cartesian Feedback-loop Signal Canceller (CFSC) recovers a signal of interest from a composite signal by cancelling a narrowband interferer from the composite signal. According to one embodiment, narrowband interference cancellation is performed by destructively combining a composite signal including a narrowband interference signal and a signal of interest with an estimate of the narrowband interference signal to generate an interference-compensated signal. A feedback signal is generated having Cartesian components derived from the interference-compensated signal. Cartesian components associated with the signal of interest are removed from the feedback signal to generate the narrowband interference signal estimate.

## Description

### BACKGROUND

The present invention generally relates to narrowband interference cancellation, and particularly relates to narrowband interference cancellation using a Cartesian feedback loop.

A composite signal received at a wireless receiver comprises a signal of interest and interfering signals, one or more of which may be narrowband in nature, i.e., have a narrow frequency spectrum in relation to the signal of interest. Receiver quality is measured at least in part based on the receiver's ability to extract or recover a signal of interest from the composite signal while rejecting interference. One conventional signal recovery approach involves filtering interfering signals from the composite signal, particularly a dominant interfering signal. A dominant interferer may be the strongest interferer, or the one having the most problematic frequency spectrum.

Some applications are prone to narrowband interference. For example, a Wideband Code Division Multiple Access (WCDMA) receiver conventionally includes one or more channel filters for suppressing narrowband interference. Narrowband interference arises in a WCDMA network when the network is collocated with a Global System for Mobile Communications (GSM) network. GSM networks subdivide their total available bandwidth into a multitude of narrowband carrier frequency channels each spaced 200 kHz apart. Accordingly, a WCDMA receiver is subjected to a narrowband GSM interferer spaced approximately 2.7 MHz away from the center frequency of the WCDMA signal of interest (or possibly even closer for prospective wideband cellular standards). The narrowband GSM interferer typically has a power level greater than that of the desired WCDMA signal. As such, a channel filter tuned to the desired WCDMA signal must suppress the narrowband GSM interferer by 30 to 40 dB or more. Absent such suppression, downstream receiver circuits must be able to tolerate or suppress potentially significant levels of narrowband interference, which may be impractical or impossible to achieve.

Further complicating channel filter design is the frequency closeness between a desired WCDMA signal and a narrowband GSM interferer. The channel filter must have a steep cutoff response to suppress the narrowband GSM interferer without adversely affecting the desired WCDMA signal. Of course, narrowband interference cancellation is a concern for applications other than WCDMA where narrowband interferers have large power levels and are spaced closely in frequency to the wideband signal of interest. Typically, conventional filters have one or more high-Q (narrowband) zeroes for providing a steep cutoff response, e.g., such as a band-stop filter. However, steep band-stop filters are complex and difficult to implement. Further, filters having a steep cutoff response tend to consume large amounts of power and semiconductor area. The signal of interest is also subjected to distortion, attenuation or other adverse effects that arise when the signal of interest is passed through a filtering stage to remove narrowband interference.

### SUMMARY

According to the methods and apparatus taught herein, a Cartesian Feedback-loop Signal Canceller (CFSC) cancels narrowband interference from a composite signal to recover a signal of interest. The CFSC cancels a narrowband interferer by generating an estimate of the interferer and destructively combining the estimate with the composite signal to form an interference-compensated signal. The interference-compensated signal is frequency down-converted to Cartesian components to form a feedback signal. Cartesian components associated with the signal of interest are filtered or removed from the feedback signal. The remaining Cartesian components correspond to any residual difference between the narrowband interferer estimate and interferer that remains after destructive combination. The filtered feedback signal is then modulated and amplified to form the narrowband interferer estimate, thus completing a closed-loop Cartesian interference cancellation feedback loop without subjecting the signal of interest to distortion, attenuation or other adverse effects associated with passing the signal of interest through a filter.

According to one embodiment, narrowband interference cancellation is performed by destructively combining a composite signal including a narrowband interference signal and a signal of interest with an estimate of the narrowband interference signal to generate an interference-compensated signal. A feedback signal is generated having Cartesian components derived from the interference-compensated signal. Cartesian components associated with the signal of interest are removed from the feedback signal to generate the narrowband interference signal estimate. The CFSC may be used to cancel various types of narrowband interference such as GSM interference in a WCDMA receiver, undesired sampling images generated by a digital-to-analog converter, etc.

Of course, the present invention is not limited to the above features and advantages. Those skilled in the art will recognize additional features and advantages upon reading the following detailed description, and upon viewing the accompanying drawings.

### BRIEF DESCRIPTION OF THE DRAWINGS

Figure 1 is a block diagram of an embodiment of a Cartesian feedback-loop signal canceller.
Figure 2 illustrates a frequency spectrum plot for an exemplary baseband signal having a narrowband interferer component and a desired wideband signal component.
Figure 3 illustrates a frequency spectrum plot for the exemplary baseband signal shown in Figure 2 after frequency down-conversion.
Figure 4 illustrates an embodiment of processing logic for cancelling a narrowband interferer from a composite signal to recover a signal of interest.
Figure 5 is a block diagram of an embodiment of a radio/wireless receiver including a Cartesian feedback-loop signal canceller.
Figure 6 is a block diagram of an embodiment of a circuit including a digital-to-analog converter and a Cartesian feedback-loop signal canceller.
Figure 7 illustrates an exemplary frequency spectrum plot of the digital-to-analog converter output of Figure 6 absent processing by the Cartesian feedback-loop signal canceller.
Figure 8 illustrates an exemplary frequency spectrum plot of the digital-to-analog converter output of Figure 6 after processing by the Cartesian feedback-loop signal canceller.
Figure 9 is a block diagram of an embodiment of a transimpedance operational amplifier including a Cartesian feedback-loop signal canceller.

### DETAILED DESCRIPTION

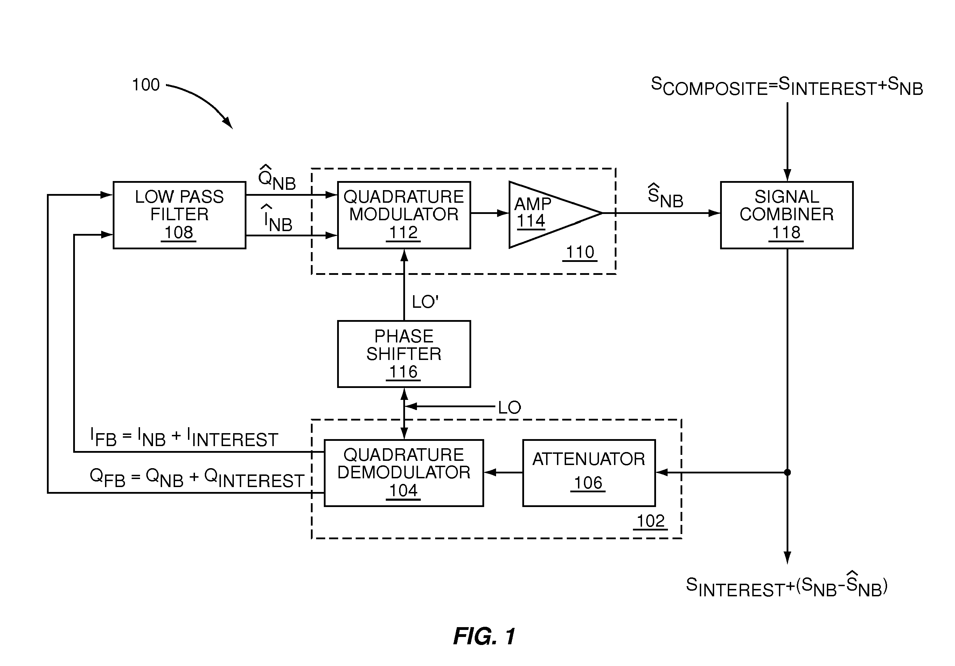

Figure 1 illustrates an embodiment of a Cartesian Feedback-loop Signal Canceller (CFSC) 100. The CFSC 100 cancels a narrowband interference signal (S_{NB}) from a composite signal (S_{COMPOSITE}) to recover a signal of interest (S_{INTEREST}). The CFSC 100 cancels the narrowband interferer by generating an estimate (S_{NB}) of the narrowband interferer and destructively combining the estimate with the composite signal to form an interference-compensated signal. The interference-compensated signal includes the signal of interest and any residual difference remaining between the narrowband interferer estimate and interferer after destructive combination (i.e., S_{NB} - S_{NB}).

The interference-compensated signal is fed back through the CFSC 100 via a feedback path 102. The feedback path 102 generates a feedback signal having in-phase (I) and quadrature (Q) Cartesian components derived from the interference-compensated signal. At this point, the feedback signal (I_{FB} / Q_{FB}) includes Cartesian components associated with both the signal of interest (I_{INTEREST} / Q_{INTEREST}) and any residual difference remaining between the narrowband interferer estimate and interferer after destructive combination (I_{NB}/Q_{NB} = S_{NB} - Ŝ_{NB}). The Cartesian components associated with the signal of interest are removed from the feedback signal. The feedback signal is then used to generate the narrowband interference signal estimate based on the remaining interferer Cartesian components, thus completing a closed-loop Cartesian feedback loop.

Unlike conventional filters, the CFSC 100 does not filter the narrowband interferer from the composite signal to recover the signal of interest. Instead, the CFSC 100 filters the signal of interest from a feedback signal. An estimate of the narrowband interferer is then generated from the feedback signal which is then used to cancel the narrowband interference. This way, the signal of interest is not subjected to distortion, attenuation or other adverse effects associated with passing the signal of interest through a filter.

In more detail, the feedback path 102 of the CFSC 100 comprises a demodulator 104 and an optional attenuator 106. The optional attenuator 106 reduces signal distortion when the composite signal has a large voltage margin by attenuating the interference-compensated signal. The demodulator 104 down-converts the interference-compensated signal to in-phase (I_{FB}) and quadrature (Q_{FB}) Cartesian components using a local oscillation frequency (LO) as is well known in the art. The down-converted Cartesian components form the feedback signal. In one embodiment, the demodulator 104 includes a switched mixer that down-converts the interference-compensated signal at odd harmonics of the local oscillation frequency. Preferably, the switched mixer is double-balanced to avoid even-order distortion and has a small DC-offset at its output to avoid a large tone.

The local oscillation frequency may be fixed or programmable. Either way, the local oscillation frequency is preferably set near a center frequency of the narrowband interferer. In one embodiment, the local oscillation frequency is fixed and approximately equals the narrowband center frequency. A different embodiment employs a reference clock (not shown) which is programmable to a desired local oscillation frequency for use by the CFSC 100. This way, the reference clock may be shared by the CFSC 100 and other components (not shown). According to this embodiment, the local oscillation frequency is near, but may not identically match the narrowband center frequency.

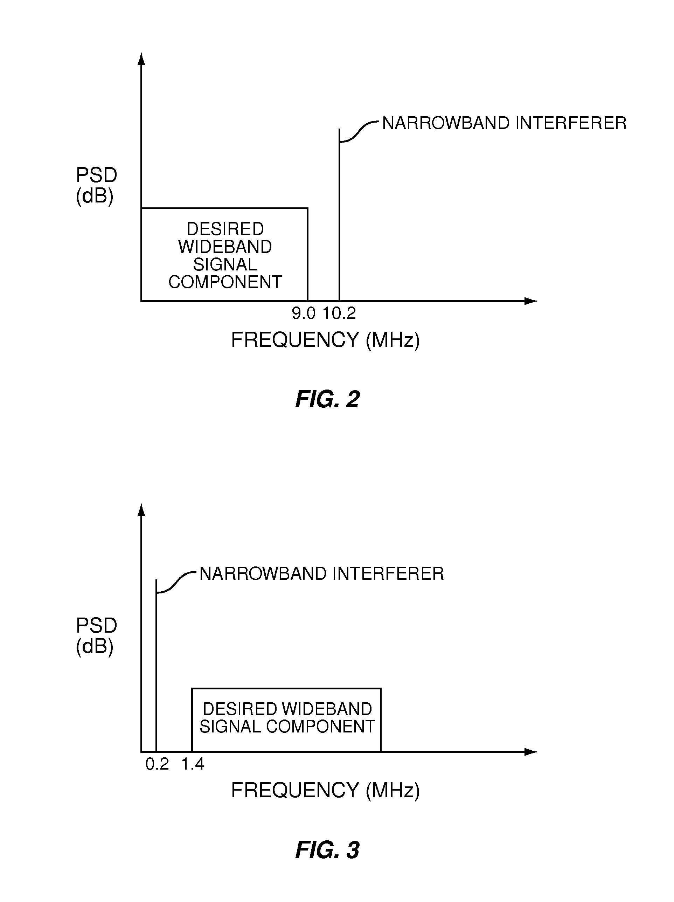

Regardless, the local oscillation frequency is set near the center frequency of the narrowband interferer to down-convert the residual interferer component of the interference-compensated signal to relatively low frequency Cartesian components, e.g., less than a few MHz. Figure 2 illustrates an exemplary baseband signal having a narrowband interferer component at a center frequency of 10.2 MHz and a desired wideband signal component having an edge frequency of 9.0 MHz. If the local oscillation frequency is set to approximately 10.4 MHz, the residual narrowband interference is down-converted by the demodulator 104 to Cartesian components (I_{NB} / Q_{NB}) having a center frequency of approximately 200 KHz as shown in Figure 3. The desired wideband signal component is similarly down-converted to Cartesian components (I_{INTEREST} / Q_{INTEREST}) having an edge frequency of approximately 1.4 MHz also as shown in Figure 3. Although the feedback signal comprises Cartesian components associated with both the residual narrowband interference and the desired wideband signal component, the Cartesian components associated with the wideband component have an edge frequency higher than the center frequency of the narrowband Cartesian components. Of course, those skilled in the art will readily recognize that frequency down-conversion may be applied to any signal of interest and narrowband interferer for yielding a desired frequency spacing between the Cartesian components of the two signals. For example, in an embodiment, the signal of interest is a WCDMA signal and the narrowband interferer is a GSM signal.

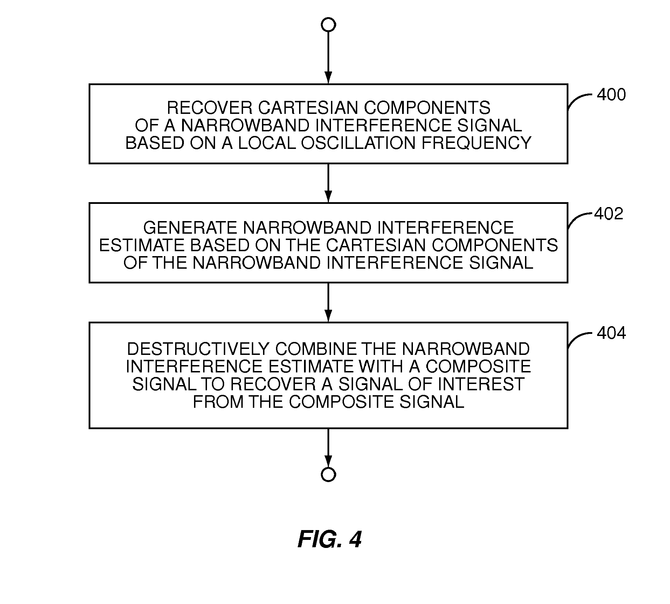

A filter 108 such as a low pass filter (LPF) included in the CFSC 100 processes the Cartesian components of the feedback signal based on the frequency offset between the signal of interest and the residual narrowband interference. The filter 108 is tuned to pass the Cartesian components associated with the residual narrowband interference and block the Cartesian components associated with the desired signal, e.g., as illustrated by Step 400 of Figure 4. The filter 108 is designed so that the CFSC 100 has high loop-gain for the frequency band of the interferer thereby providing a correspondingly high suppression of the interferer. For the frequency band of the signal of interest, the CFSC 100 has a low loop-gain thereby providing zero or only a small degree of suppression. The signal of interest is effectively removed from the feedback signal when the corresponding loop-gain is low, leaving only the Cartesian components of the residual narrowband interferer at the filter output (Î_{NB}/Q̂_{NB}). The loop-gain of the CFSC 100 is partly a function of the filter transfer function. As such, the filter 108 is designed to provide sufficient attenuation of the desired signal while passing the residual narrowband interferer.

For example, based on the spectrum illustrated in Figure 3, the filter 108 may comprise a first-order LPF having a pole at zero and a gain-bandwidth of 200 KHz for passing the residual narrowband interferer while blocking the desired wideband signal component. The first-order filter provides a 6 dB/octave roll-off. There is approximately a 2.8 octave distance between the center frequency of the narrowband Cartesian components (200 KHz) and the edge frequency of the wideband Cartesian components (1.4 MHZ). The 2.8 octave distance between the two frequencies corresponds to a CFSC loop-gain of approximately 17dB at 200 KHz when the loop gain is 0 dB at 1.4 MHz. Thus, the narrowband interferer is suppressed by approximately 17 dB when the interference estimate is combined with the composite signal. However, the desired wideband signal component is attenuated only by approximately 3 dB at its edge frequency.

The filter 108 may comprise a higher-order filter to achieve a steeper roll-off response at the expense of reduced phase margin for the loop. In one embodiment, the filter 108 has two real-valued poles (e.g., two poles at -2π*570 krads/s or one pole at -2π*350 krads/s and the other at 3x the first pole). In another embodiment, the filter 108 has a Butterworth pole pair (e.g., poles at - 2π*380±j2π*380 krads/s). Regardless, filter selection depends on the application supported. Accordingly, any filter having a frequency response that sufficiently passes the residual narrowband interferer while blocking the signal of interest from the CFSC feedback signal may be used. The bandwidth of the filter 108 partly determines the CFSC loop gain and is selected to sufficiently attenuate the narrowband interferer without adversely affecting the signal of interest when the narrowband interferer estimate is combined with the composite signal.

A signal estimator 110 included in the CFSC 100 converts the filter output (Î_{NB} /Q̂_{NB}) to the narrowband interferer estimate (Ŝ_{NB}), e.g., as illustrated by Step 402 of Figure 4. In one embodiment, the signal estimator 110 comprises a modulator 112 and an amplifier 114. The modulator 112 upconverts the filter output to a radio frequency signal based on the local oscillation frequency as is well known in the art. In one embodiment, the modulator 112 includes a multiplying rather than a switched mixer to avoid generation of harmonics of the local oscillation frequency. The multiplying mixer may be driven by a sinusoidal-like local oscillation frequency. The modulator 112 may include one or more optional filters for attenuating harmonic content present at the modulator output. In another embodiment, the modulator 112 includes a passive mixer that avoids flicker noise when the CFSC 100 is implemented in a Complimentary Metal Oxide Semiconductor (CMOS) technology. A phase shifter 116 may be included in the CFSC 100 to compensate for phase rotation that may be introduced by blocks between and including the modulator 112 and the demodulator 104 as is well known in the art. The phase shifter 116 provides a phase-shifted version (LO') of the local oscillation frequency to the modulator 112 for ensuring proper synchronization between the modulator 112 and demodulator 104 of the CFSC 100.

The amplifier 114 included in the signal estimator 110 amplifies the modulator output to produce an estimate (Ŝ_{NB}) of the narrowband interferer. A signal combiner 118 such as a summer or a common circuit node destructively combines the interference estimate and the composite signal to recover the signal of interest from the composite signal, e.g., as illustrated by Step 404 of Figure 4. In one embodiment, the amplifier 114 is an inverting amplifier and the signal combiner 118 is a common circuit node. In another embodiment, the amplifier 114 is non-inverting and the signal combiner 118 is a summer which inverts the amplifier output and then sums the inverted amplifier output and composite signal to recover the signal of interest. Either way, the narrowband interferer and interference estimate tend to cancel when the estimate is destructively combined with the composite signal. The interference-compensated output of the signal combiner is fed back to the CFSC feedback path 102, thus completing a closed-loop feedback path.

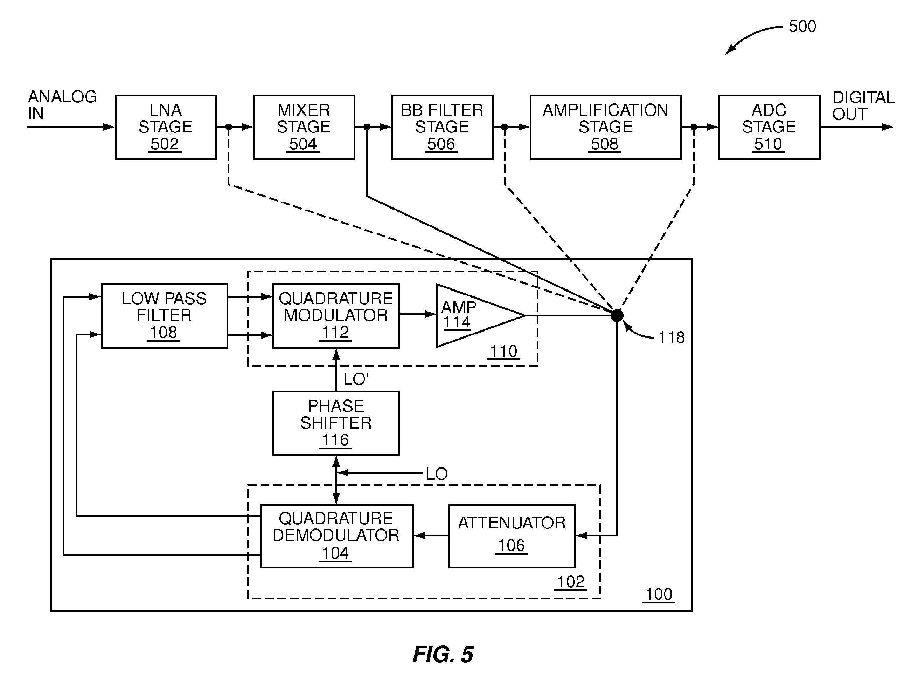

Figure 5 illustrates an embodiment of a radio/wireless receiver 500 including the CFSC 100. The receiver 500 includes various stages 502 - 510 for processing received radio signals. The CFSC 100 is coupled between any two successive receiver stages for cancelling narrowband interference. For illustration purposes only, the CFSC 100 is coupled between a mixer stage 504 and a baseband filter stage 506 in Figure 5. Accordingly, the CFSC 100 processes either the In-phase or Quadrature component of the mixer 504 output. A second CFSC (not shown) processes the other component. Those skilled in the art will readily recognize placement of the CFSC 100 depends on various considerations including constraints such as dynamic range placed on circuitry downstream from the CFSC 100 (e.g., an amplification stage 508 and analog-to-digital converter (ADC) stage 510 in Figure 5). Dashed lines are shown in Figure 5 to illustrate that the CFSC 100 may be coupled between any two successive stages of the receiver 500. According to this embodiment, the CFSC signal combiner 118 comprises a common circuit node. A narrowband interferer is cancelled from a baseband signal at the common circuit node 118 to recover a signal of interest.

In more detail, a low-noise amplifier (LNA) stage 502 of the radio/wireless receiver 500 generates an LNA output based on a received analog input signal. The mixer stage 504 frequency down-converts the LNA output. In one embodiment, the mixer 504 directly converts the LNA output to baseband Cartesian components, thus making the receiver 500 a direct-conversion (homodyne) receiver. Two CFSCs 100 may be included for processing the separate Cartesian components output by the direct-conversion mixer stage 504. Alternatively, a single CFSC 100 may be used when the baseband components are accurately matched. The interferer is present in both the I and Q baseband components with approximately the same magnitude, but with a 90° phase shift when matched. Accordingly, a single CFSC 100 may be used to detect the interferer in both baseband components and cancel the interferer from the composite signal.

Regardless, the baseband filter stage 506 filters the mixer output which is then amplified by the amplification stage 508. The ADC stage 510 generates one or more digital outputs for use by a digital domain (not shown) of the radio/wireless receiver 500. Of course, the receiver 500 may comprise other suitable components. For example, the digital domain of the receiver 500 may include digital components for processing the digital output of the ADC stage 510. Additional analog stages (not shown) may also be included in the receiver 500 between which the CFSC 100 may be coupled for cancelling narrowband interference.

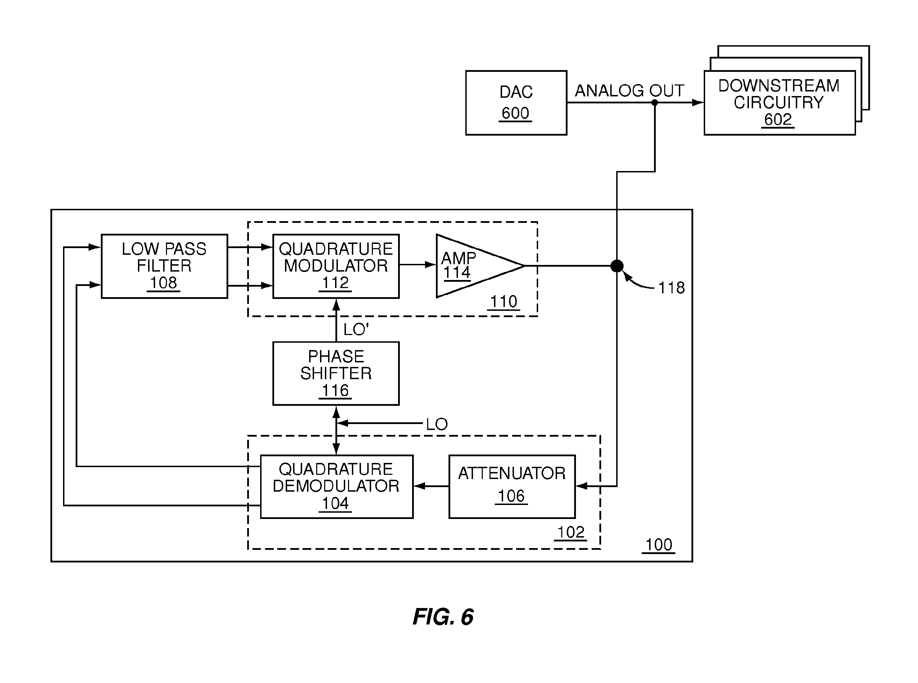

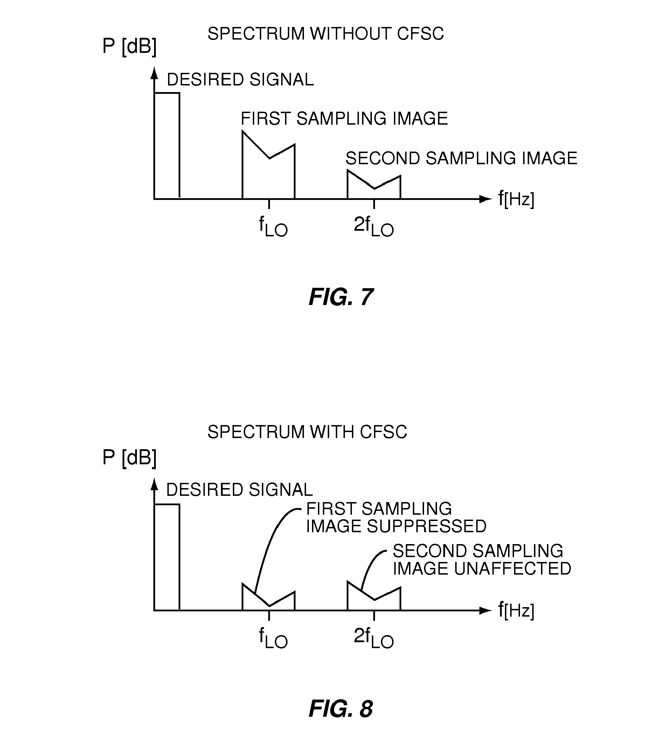

Figure 6 illustrates a circuit embodiment where the CFSC 100 is coupled to an output of a digital-to-analog converter (DAC) 600. The DAC 600 may be included in any circuit requiring digital-to-analog signal conversion. During operation, the DAC 600 outputs the desired analog signal plus images having a repetitive narrowband frequency spectrum at multiples of the DAC sampling frequency. The images adversely affect operation of circuitry 602 downstream from the DAC 600 if un-attenuated as shown in Figure 7. The local oscillation frequency of the CFSC 100 is set to recover low-frequency Cartesian components of a dominant interfering image generated by the DAC 600. The CFSC filter 108 has a frequency response tuned to pass the Cartesian components of the dominant interfering image and reject the desired analog signal generated by the DAC 600. The CFSC signal estimator 110 generates an estimate of the dominant interfering image based on the filter output. The estimate is destructively combined at a common circuit node 118 coupling the CFSC 100 to the DAC output to cancel or suppress the interfering image from the DAC output as shown in Figure 8.

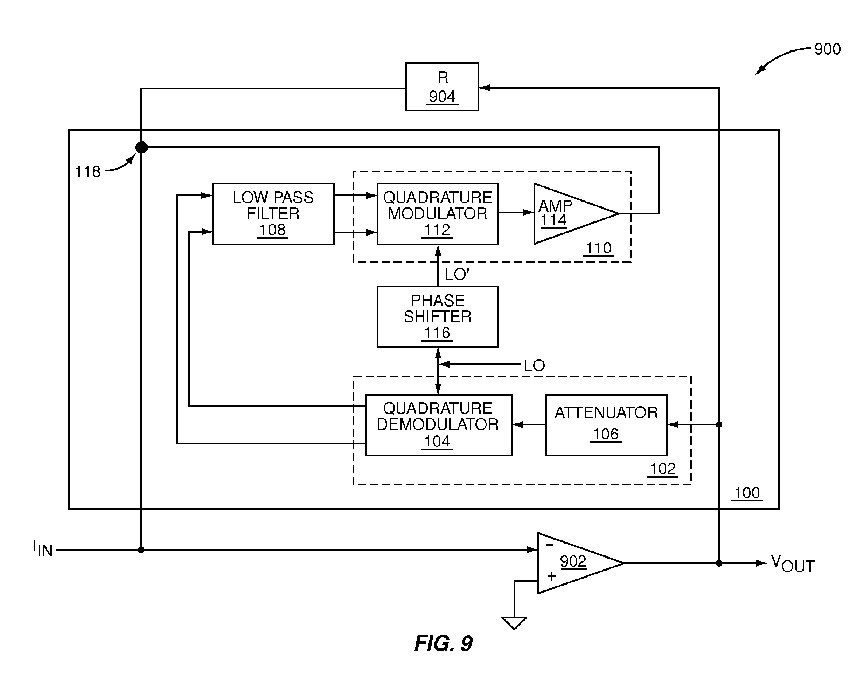

Figure 9 illustrates an embodiment of an operational amplifier (op-amp) circuit 900 including the CFSC 100. The op-amp circuit 900 also includes an inverting op-amp 902 and a feedback resistor (R) 904. The CFSC 100 is coupled in parallel with the feedback resistor 904 and provides a transimpedance gain (in unit Siemens) to the op-amp circuit 900. The complete op-amp circuit 900 (including the CFSC 100) is a current-input-voltage-output amplifier and thus operates as a (V/I) transimpedance amplifier. The CFSC 100 however acts as a voltage-input-current-output (I/V) transconductance amplifier. Accordingly, the op-amp circuit 900 provides a gain of approximately R ohms for all frequencies except for those close to the local oscillation frequency of the CFSC 100.

With the above range of variations and applications in mind, it should be understood that the present invention is not limited by the foregoing description, nor is it limited by the accompanying drawings. Instead, the present invention is limited only by the following claims, and their legal equivalents.

## Claims

1. A method of narrowband interference cancellation, comprising:
destructively combining a composite signal including a narrowband interference signal and a signal of interest with an estimate of the narrowband interference signal to generate an interference-compensated signal;
generating a feedback signal having Cartesian components derived from the interference-compensated signal; and
removing Cartesian components associated with the signal of interest from the feedback signal to generate the narrowband interference signal estimate.

2. The method of claim 1, wherein destructively combining the composite signal with the narrowband interference signal estimate comprises summing the composite signal and an opposite of the narrowband interference signal estimate.

3. The method of claim 1, wherein destructively combining the composite signal with the narrowband interference signal estimate comprises destructively combining a WCDMA baseband signal including a GSM narrowband interference signal and a WCDMA signal of interest with an estimate of the GSM narrowband interference signal.

4. The method of claim 3, wherein generating a feedback signal having Cartesian components derived from the interference-compensated signal comprises demodulating the interference-compensated signal as a function of the GSM narrowband interference signal frequency.

5. The method of claim 1, wherein destructively combining the composite signal with the narrowband interference signal estimate comprises destructively combining a digital-to-analog converter output signal including a narrowband interference image and a signal of interest with an estimate of the narrowband interference image.

6. The method of claim 5, wherein generating a feedback signal having Cartesian components derived from the interference-compensated signal comprises demodulating the interference-compensated signal as a function of the narrowband interference image frequency.

7. The method of claim 1, wherein generating a feedback signal having Cartesian components derived from the interference-compensated signal comprises demodulating an output of a transimpedance operational amplifier as a function of the frequency of an interference signal input to the transimpedance operational amplifier.

8. The method of claim 1, wherein generating the feedback signal comprises demodulating the interference-compensated signal as a function of the narrowband interference signal frequency.

9. The method of claim 1, wherein removing Cartesian components associated with the signal of interest from the feedback signal comprises low-pass filtering the feedback signal to reject the Cartesian components associated with the signal of interest.

10. The method of claim 1, wherein the narrowband interference signal estimate is generated by:
modulating the feedback signal after removal of the Cartesian components associated with the signal of interest; and
amplifying the modulated feedback signal as the narrowband interference signal estimate.

11. A narrowband interference cancellation circuit, comprising:
a signal combiner configured to destructively combine a composite signal including a narrowband interference signal and a signal of interest with an estimate of the narrowband interference signal to generate an interference-compensated signal;
a feedback path configured to generate a feedback signal having Cartesian components derived from the interference-compensated signal;
a filter configured to remove Cartesian components associated with the signal of interest from the feedback signal; and
a signal estimator configured to generate the narrowband interference signal estimate based on the feedback signal after removal of the Cartesian components associated with the signal of interest.

12. The circuit of claim 11, wherein the signal combiner is configured to sum the composite signal and an opposite of the narrowband interference signal estimate.

13. The circuit of claim 11, wherein the signal combiner is configured to destructively combine a WCDMA baseband signal including a GSM narrowband interference signal and a WCDMA signal of interest with an estimate of the GSM narrowband interference signal.

14. The circuit of claim 13, wherein the feedback path is configured to demodulate the interference-compensated signal as a function of the GSM narrowband interference signal frequency.

15. The circuit of claim 11, wherein the signal combiner is configured to destructively combine a digital-to-analog converter output signal including a narrowband interference image and a signal of interest with an estimate of the narrowband interference image.

16. The circuit of claim 15, wherein the feedback path is configured to demodulate the interference-compensated signal as a function of the narrowband interference image frequency.

17. The circuit of claim 11, wherein the feedback path is configured to demodulate an output of a transimpedance operational amplifier coupled to the narrowband interference cancellation circuit as a function of the frequency of an interference signal input to the transimpedance operational amplifier.

18. The circuit of claim 11, wherein the feedback path is configured to demodulate the interference-compensated signal as a function of the narrowband interference signal frequency.

19. The circuit of claim 11, wherein the filter is configured to low-pass filter the feedback signal to reject the Cartesian components associated with the signal of interest.

20. The circuit of claim 11, wherein the signal estimator is configured to modulate the feedback signal after removal of the Cartesian components associated with the signal of interest and amplify the modulated feedback signal as the narrowband interference signal estimate.

21. A radio receiver including the circuit as claimed in claim 11.
